# EUROPÄISCHE PATENTSCHRIFT

(11) **EP 3 166 707 B1**
(45) Veröffentlichungstag und Bekanntmachung des Hinweises auf die Patenterteilung: **13.11.2019**
(21) Anmeldenummer: 15717092.9
(22) Anmeldetag: 08.04.2015
(51) Int. Cl.: B01D 39/08

(54) **FILTERELEMENT**
FILTER ELEMENT
ÉLÉMENT FILTRANT

(30) Priorität: 10.07.2014 DE 102014010196
(43) Veröffentlichungstag der Anmeldung: 17.05.2017
(73) Patentinhaber: RT-Filtertechnik Gmbh, 88048 Friedrichshafen (DE)
(72) Erfinder: OBERLI, Frank, 8193 Eglisau (CH); HIRT, Daniel, 99631 Weissensee (DE)
(74) Vertreter: Bartels und Partner, Patentanwälte
(86) Internationale Anmeldenummer: PCT/EP2015/000737
(87) Internationale Veröffentlichungsnummer: WO 2016/005014

(56) Entgegenhaltungen:
- DE-A1-102007 013 178
- DE-T2- 69 736 548
- US-A- 5 250 179
- US-B1- 6 238 552
- US-B1- 6 949 155

## Beschreibung

Die Erfindung betrifft ein Filterelement mit den Merkmalen im Oberbegriff von Anspruch 1.

Dahingehende Filterelemente kommen regelmäßig in Gesamtanlagen, wie Schmier- und Hydrauliksystemen, zum Einsatz, wobei etwa 70 % der Ausfälle solcher Systeme und Anlagen medienbedingt sind, d.h. dem jeweils eingesetzten Betriebsmedium fällt eine entscheidende Rolle innerhalb der hydraulischen Anlage zu. Grundsätzlich gilt, je sauberer das Hydraulikmedium ist und je besser es von äußeren Einflüssen, wie partikulären Verschmutzungen, extremen Temperaturverhältnissen, gasförmigem Eintrag etc. geschützt wird, desto effizienter und wirtschaftlicher kann die Anlage auch bei langfristigen Einsatzdauern betrieben werden.

Die Auswahl der optimalen Filtrationslösung für jeden Anwendungszweck trägt maßgeblich mit dazu bei, Schäden durch Verschmutzungseintrag in das Fluid zu verhindern, die Anlagenverfügbarkeit zu erhöhen und somit die Produktivität merklich zu steigern. Hierzu werden im Rahmen von Hydraulikanwendungen regelmäßig in Filtergehäuse oder Filtervorrichtungen eingebaute oder eingesetzte Filterelemente genutzt, die von Verschmutzungen entsprechend zugesetzt dann gegen Neuelemente getauscht werden. Demgemäß haben Filterelemente die Aufgabe, die Verschmutzung im Fluid auf das gewünschte Niveau abzusenken und anschließend über die gesamte Betriebszeit der Anlage zumindest stabil zu halten.

Stand der Technik (DE 10 2004 061 078 A1) sind Filteraufbauten gebildet aus Vliesen, aus Glasfaser- und/oder Kunststoffmaterialien, die als Tiefenfilter dienen. Zusätzliche Stützgewebe innerhalb des Filtermedien-Lagenverbundes aus verwobenen Metall- oder Kunststofffäden, die den Tiefenfilter abstützen, sind dabei gleichermaßen im Einsatz. Die Filterendkappen des Filterelementes, zwischen denen sich zur Erhöhung der wirksamen Filterfläche ein plissiertes Filtermedium unter Bildung einer Art Hohlzylinder erstreckt, bestehen in der Regel aus Metall-Tiefziehteilen oder gespritzten Kunststoffen, wie Polyethylen oder Polyamid. Unter Bildung des Filterelementes werden die genannten Baugruppen durch Verklebung unter Einsatz von Ein- oder Zwei-Komponentenklebstoffen miteinander fest verbunden.

Um zu vermeiden, dass verbrauchte Hydraulikfilter, respektive Filterelemente in kostenintensiver Weise auf Sondermülldeponien zu entsorgen sind, ist in der DE 10 2008 059 146 A1 eine Lösung aufgezeigt, die relevanten Baukomponenten eines verbrauchten Filterelementes durch sogenanntes Veraschen zu entsorgen. Dabei wird bei der bekannten Lösung eine die Betriebssicherheit beim Filtrationsvorgang gewährleistende Bypass-Ventileinrichtung derart ausgestaltet, dass der Schließkörper als Bestandteil des Filterelementes mit diesem zusammenhängend aus der Gehäuse-Umhüllung der Filtervorrichtung herausnehmbar und dabei von der metallischen Schließfeder der Ventileinrichtung räumlich separierbar ist. Aufgrund dieser Entkopplung der Schließfeder des Bypassventils vom Schließkörper und damit von dem Filterelement selbst ist sichergestellt, dass der Schließkörper wie der übrige nach dem Herausnehmen zu entsorgende Teil des Filterelementes aus einem veraschbaren Werkstoff gebildet ist, so dass das gesamte Filterelement, ohne dass besondere Handhabungs- oder Demontagemaßnahmen erforderlich wären, was bei der Natur der im verbrauchten Filterelement vorhandenen Rückstände, wie ölhaltige oder aggressive Schlämme, besondere Schutzmaßnahmen und großen Aufwand erfordern würde, als Ganzes wie bereits ausgeführt thermisch auf einfache Weise durch Veraschen umweltfreundlich entsorgt werden kann. Hierzu trägt auch mit bei, dass der zu veraschende Teil des Filterelementes metallfrei aufgebaut ist. Sollten dennoch Metalle bei dem Filterelement zum Einsatz kommen, wären diese nach dem Veraschen der sonstigen Filterelementbestandteile als metallischer Reststoff wieder zurückzugewinnen.

Auch kommt es in der Praxis vor, dass bei Arbeitsmaschinen, insbesondere in der Land- und Forstwirtschaft in umweltfreundlicher Weise leicht biologisch abbaubare Hydrauliköle eingesetzt werden, und verbrauchte Elemente können von einer Bedienperson bei einem Filterelementwechsel draußen in der Natur unbeabsichtigt oder achtlos zurückgelassen werden, was auch im Fall von veraschbar aufgebauten Filterelementen dazu führt, dass die verschmutzten Elemente dort körperlich unverändert sehr lange liegen bleiben können.

Die DE 697 36 548 T2 beschreibt ein gattungsgemäßes Filterelement, bestehend aus mindestens einem sich zwischen zwei Endkappen erstreckenden, vorzugsweise plissierten, Filtermedium, dessen beide freien Längsränder unter Bildung eines, vorzugsweise zylindrischen, Hohlraumes miteinander verbunden sind, wobei alle vorstehend genannten Komponenten aus biologisch abbaubaren Materialien bestehen.

Weitere Filterelemente gehen aus der US 2010/084334 A1 bzw. der DE 10 2007 013 178 A1 und der US 5 250 179 hervor.

Dies vorausgeschickt liegt der Erfindung die Aufgabe zugrunde, eine verbesserte Filterelementlösung zu schaffen, die in umweltverträglicher Weise entsorgbar ist und die von der Gesamt-CO₂-Bilanz her im Wesentlichen neutral gestaltet werden kann.

Eine dahingehende Aufgabe löst ein Filterelement mit den Merkmalen des Patentanspruches 1 in seiner Gesamtheit.

Gemäß Anspruch 1 ist vorgesehen, dass zur Verbindung der beiden freien Längsränder des Filtermediums miteinander ein Hotmelt-Klebstoff in Form eines thermoplastischen Kunststoffblends auf Ligninbasis oder ein Verbindungsclip zum Einsatz kommt, der aus einem biologisch abbaubaren Folienmaterial in Form eines auf Polyhydroxyalkanoaten (PHA) basierenden thermoplastischen Kunststoffblends besteht, und dass das Kunststoffmaterial für die jeweilige Endkappe aus einem auf PHA oder Lignin basierenden thermoplastischen Kunststoffblend gebildet ist. Dadurch, dass die funktionsmäßig bedeutsamen Komponenten des Filterelementes wie die beiden Endkappen und das sich dazwischen erstreckende Filtermedium aus biologisch abbaubaren Materialien bestehen, ist das erfindungsgemäße Filterelement als Ganzes, aber auch in Teilen, kompostierbar. Dies gilt auch für den Fall, dass das Filtermedium noch Bestandteile des Hydraulikmediums mit aufweist, das als Naturstoff im Sinne einer Kompostierung gleichfalls verrottet. Das erfindungsgemäße Filterelement erfüllt dabei die Anforderungen an eine vollständige biologische Abbaubarkeit gemäß der DIN-Norm EN 14995 (Stand 2006) nach der "die Zerlegung einer chemischen Verbindung oder eines organischen Materials durch Mikroorganismen in Gegenwart von Sauerstoff in Kohlendioxid, Wasser und Salze anderer vorhandener Elemente (Mineralisation) unter Bildung neuer Biomasse oder in Abwesenheit von Sauerstoff in Kohlendioxid, Methan, Mineralsalze und neue Biomasse" verlangt wird. Dabei haben Praxisversuche gezeigt, dass das jeweils in Abhängigkeit von der Filtrationsaufgabe eingesetzte Filterelement sogar einen wiederverwertbaren Kompost von hoher Qualität ergibt.

Neben einer einfachen Entsorgung wäre in Abhängigkeit von der geltenden deutschen und/oder europäischen Gesetzeslage auch eine Einstufung als nicht gefährlicher Abfall für das Filterelement möglich, insbesondere wenn mittels des Filterelementes leicht biologisch abbaubare Hydrauliköle in filtrierender Weise behandelt worden sind. Die Umweltbelastung durch die eingesetzten kompostierbaren Rohstoffe oder Ausgangsstoffe ist somit deutlich geringer als bei konventionellen Hydraulikfiltern, weil die erfindungsgemäße Lösung zu nahezu 100 % aus nachwachsenden Rohstoffen gebildet sein kann und demgemäß von der Gesamtbilanz her CO₂-neutral bei der kompostierenden Verwertung ist. Aufgrund der eingesetzten Natur-Rohstoffe findet auch keine statische Aufladung statt, und im Bedarfsfall kann das kompostierbare Filterelement nach wie vor thermisch verwertet; also auch voll verascht werden. Da die Einsatzmaterialien für das Filterelement als Naturstoffe in Deutschland ohne Weiteres erhältlich sind, stützt das derart aufgebaute Filterelement auch die deutsche Wirtschaft als Ganzes und rechtfertigt die Bezeichnung "Made in Germany" als weltweit anerkannten Hinweis für deutsche Qualitätsprodukte.

Dahingehende Verbindungstechniken für den festen Aneinanderhalt der beiden Längsränder des Filtermediums sind in der DE 199 33 163 A1 aufgezeigt sowie in der DE 101 35 421 A1, wobei die Dokumente das Verschweißen der Filtermattenenden unter teilweisem Einsatz einer Einprägeschweißnaht und einer Glattschweißnaht lehren, wobei als Schweißzusatzwerkstoff ein Verbindungsclip zum Einsatz kommt, der im Querschnitt gesehen U-förmig ausgebildet ist und als U-förmiger Leistenkörper die beiden freien Ende zwischen sich in fixierender Weise aufnimmt.

Das Filterelement ist bevorzugt mittels eines einlagigen, besonders bevorzugt jedoch mehrlagigen Filtermediums aufgebaut, wobei zumindest die Hauptfilterlage aus Zellulose-Material besteht, das frei von chemischer Modifizierung sowie von Binde- und Verfestigungsmitteln ist.

Neben der Hauptfilterlage aus Zellulosematerial, das bevorzugt auch als Feinfilter dient, können mindestens eine Vorfilter- oder Schutzvlieslage vorhanden sein, die aus einem Viskosematerial, insbesondere in Form von Viskosevlies bestehen.

Als vorteilhaft hat es sich dabei herausgestellt, das Filtermedium mit einem Flächengewicht von etwa 120 g/m² auszulegen und zur Auflockerung der Medienstruktur einen etwa zehnprozentigen Anteil an Glasfasern vorzusehen. Um einen sicheren Lagenverbund zu erreichen, ist des Weiteren in vorteilhafter Weise vorgesehen, das Filtermedium zumindest auf einer Seite, vorzugsweise jedoch beidseitig mit einem glashart appretierten Stützgewebe aus einem naturbelassenen Baumwollgarn zu versehen.

Bei einer weiteren besonders bevorzugten Ausführungsform der erfindungsgemäßen Filterelementlösung ist vorgesehen, dass die jeweilige Endkappe derart aus einem Kunststoffmaterial gebildet ist, dass es durch die Aktivität natürlich vorkommender Enzyme spaltbar ist und dergestalt als Energie- und Rohstofflieferant für Mikroorganismen dient und dennoch bei Betriebstemperaturen um 95 °C sich beständig gegenüber zu filtrierendem Hydrauliköl erweist.

Sofern für das erfindungsgemäße Filterelement zur Abstützung des plissierten mattenförmigen Filtermediums ein inneres Stützrohr notwendig ist, wie im Stand der Technik aufgezeigt, ist dieses bevorzugt aus den vorstehenden Endkappenmaterialien gleichfalls aufgebaut; besonders bevorzugt kommt jedoch ein dahingehendes Filterelement ohne ein solches Stützrohr aus. Im Bedarfsfall kann ein konstruktiv notwendiges Stützrohr dem Vorrichtungs- oder Gehäuseteil zugeordnet werden, in den das Filterelement als Verbrauchsteil austauschbar eingesetzt werden kann. Für eine biologische Kompostierbarkeit ist es auch vorteilhaft, etwaige Dichteinrichtungen, wie O-Dichtringe aus Elastomermaterial, nicht zum integrierten Bauteil für das Filterelement werden zu lassen. Neben der Möglichkeit, solche Dichteinrichtungen wie O-Dichtringe leicht vom Filterelement ablösen zu können, können die dahingehenden Dichteinrichtungen auch wiederum Gegenstand der Gehäuseteilanordnung werden.

Für die Anbindung der jeweiligen Endkappe an das plissierte Filtermedium kann ein Infrarot-, ein Laser- oder ein Spiegelschweißverfahren dienen. Dahingehende Verbindungsverfahren sind grundsätzlich bekannt, wobei exemplarisch für die angesprochenen Verbindungslösungen auf ein Laser-Durchstrahlschweißverfahren nach der DE 10 2007 013 178 A1 verwiesen sei. Es wäre aber auch denkbar, die jeweilige Endkappe über einen biologisch abbaubaren Hotmelt-Klebstoff mit der Filtermatte einstückig zu verbinden.

Im Folgenden wird das erfindungsgemäße Filterelement anhand einer Ausführungsform nach der Zeichnung näher erläutert. Dabei zeigen in prinzipieller und nicht maßstäblicher Darstellung die
- Fig. 1: in teilweise aufgeschnittener Darstellung den oberen Teil eines Filterelementes; und
- Fig. 2: einen Querschnitt durch das Filterelement nach der Fig. 1 in dessen mittlerem Bereich.

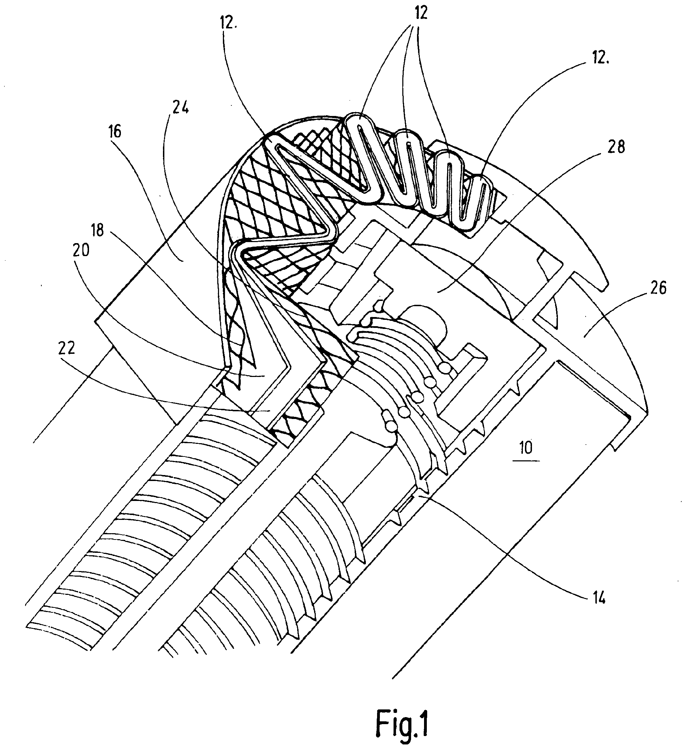

Das in Fig. 1 teilweise dargestellte Filterelement, wie es grundsätzlich vom konstruktiven Aufbau her zum Stand der Technik zählt, weist als Filterbauteil ein mattenförmiges Filtermedium 10 auf, das eine plissierte Strukturlage ausbildet mit einer vorgebbaren Flächenausdehnung und vorgebbaren Filtereigenschaften. Das dahingehende Filtermedium 10 kann zylindrisch ausgebildet sein oder, wie in der Fig. 1 dargestellt, zur Erhöhung der wirksamen Filterfläche plissiert sein mit einzelnen Filterfalten 12, die in dichter Packungsfolge sich zwischen einem inneren fluiddurchlässigen Stützrohr 14 und einem äußeren zylindrischen Gehäusemantel 16 erstrecken, der gleichfalls fluiddurchlässig ist. Der besseren Darstellung wegen sind die einzelnen Filterfalten teilweise auseinandergezogen dargestellt und der Einzellagenaufbau der plissierten Filtermatte 10 ergibt sich aus der dem Betrachter zugewandten Teildarstellung.

Bei dahingehend aufgebauten Filterelementen besteht das plissierte Filtermedium 10 üblicherweise aus einer ersten Lage Stützgewebe 18, einer zweiten Lage 20 als Schutzvlies, einer dritten Lage 22 als Hauptvlies, das eine Tiefenfiltration erlaubt; gegebenenfalls einer weiteren nicht näher dargestellten Lage eines sich anschließenden weiteren Schutzvlieses und jedenfalls einer vierten Lage 24 eines erneuten innenumfangsseitig verlaufenden Stützgewebes 24.

Das Filtermedium 10 als Filterbauteil weist in Abhängigkeit seines Lagenaufbaus und der jeweils eingesetzten Filtermaterialien vorgebbare Filtereigenschaften auf, die sich an der Filtrationsaufgabe orientieren, wobei grundsätzlich eine hohe Differenz-Druckstabilität gewünscht ist, ebenso wie eine hohe Beta-Stabilität über einen weiten Differenzdruckbereich, vorgebbare Filterfeinheiten für alle Reinheitsklassen, große Schmutzaufnahmekapazitäten sowie lange Standzeiten bei gegebenenfalls kleiner Baugröße.

In Blickrichtung auf die Fig. 1 gesehen, wird bei der gezeigten Lösung das mattenförmige Filtermedium 10 von außen nach innen durchströmt und stützt sich dergestalt innenumfangsseitig mit seinen dahingehenden Faltenumlenkungen der Filterfalten 12 am Außenumfang des fluiddurchlässigen Stützrohres 14 ab. Die Filtermattenenden sind jeweils stirnseitig in einer Endkappe aufgenommen, wobei in der Fig. 1 nur die obere Endkappe 26 dargestellt ist. Die erläuterten Verhältnisse gelten aber auch für die nicht näher dargestellte untere Endkappe entsprechend. Ferner umfasst die obere Endkappe 26 ein federbelastetes Bypassventil 28, das aus Sicherheitsgründen einen Fluiddurchlass ermöglicht, auch wenn die Filtermatte 10, respektive das Filtermedium von partikulären Verschmutzungen zugesetzt ist.

Das in Fig. 1 gezeigte Filterelement ist betreffend einen Teil seiner Filterfalten 12 auseinandergezogen dargestellt, um dergestalt eine verbesserte Betrachtung der Einzelkomponenten des Filtermediums 10 zu ermöglichen. Bei der vorliegenden Elementlösung ist vorgesehen, dass sowohl das innere Stützrohr 14 als auch das Bypassventil 28 Bestandteil einer nicht näher dargestellten Gehäuseanordnung sind, in die das Filterelement in üblicher Weise austauschbar eingesetzt werden kann. Ferner ist nicht zwingend notwendig, dass der äußere Gehäusemantel 16 vorhanden ist, und sofern dieser aus üblichen Kunststoffmaterialien besteht, ist jedenfalls ein einfaches Entfernen des Mantels 16 von der sonstigen Elementstruktur im Bedarfsfall möglich.

Für die Hauptfilterlage 22, die als Fein- oder Tiefenfilter fungiert, kommt ein Zellulosematerial zum Einsatz, das frei von chemischer Modifizierung sowie von Binde- und Verfestigungsmitteln ist. Die dahingehende Filterlage soll bevorzugt ein Flächengewicht von etwa 120 g/m² haben, und zur Auflockerung der Medienstruktur weist diese einen etwa zehnprozentigen Anteil an Glasfasern auf. Besonders bevorzugt kommt ein Papier der Fa. Hahnemühle FineArt GmbH mit Firmensitz in Dassel zum Einsatz, und die verwendeten Glasfasern der Kategorie B06 sind etwa 30 mm lang. Sofern Schutzvliese wie das Vlies 20 zum Einsatz kommen, bestehen diese aus Viskosematerial der AVO Vliesstoffe und Handels GmbH mit Firmensitz in Hochenburg. Sofern neben dem Haupt- oder Feinfilter 22 noch eine Vorfilterlage zum Einsatz kommen soll, werden hierfür gleichfalls Vliesmaterialien aus Viskose bevorzugt eingesetzt. Die beiden angesprochenen Stützgewebe 18 und 24 bestehen aus einem Baumwollgewebe, welches glashart appretiert ist. Ein dahingehendes Baumwollgewebe ist unter der Artikel-Nr. 55/667 von der Fa. Leco-Werke Lechtreck GmbH & Co. KG mit Firmensitz Emsdetten erhältlich.

Die jeweilige Endkappe 26 für das Filterelement lässt sich formgebend mittels eines konventionellen Spritzgussverfahrens erhalten. Die jeweilige Endkappe besteht aus einem PHA-basierenden thermoplastischen Kunststoffblend. Der dahingehende Stoff gehört zu den Polyhydroxyalkanoaten; natürlich vorkommende, wasserunlösliche und lineare Polyester, die von vielen Bakterien als Reservestoffe für Kohlenstoff und Energie gebildet werden. Der dahingehende Biopolymer-Werkstoff ist biologisch abbaubar. Als besonders geeigneter Vertreter für die Herstellung der jeweiligen Endkappe 26 eignet sich Polyhydroxy-Buttersäure. Ein dahingehender PHA-basierender thermoplastischer Kunststoffblend ist unter der Markenbezeichnung Biomer® P304 von Seiten der Fa. Biomer mit Firmensitz Krailling erhältlich. Alternativ lässt sich als Kappenwerkstoff auch ein thermoplastischer Kunststoffblend auf Ligninbasis verwenden, wie er unter der Markenbezeichnung Arbor® 978M der Fa. TECNARO GmbH mit Sitz in Ilsfeld-Auenstein erhältlich ist. Die derart mit solchen Kunststoffmaterialien oder Kunststoffblends hergestellten Endkappen 26 für das Filterelement lassen sich dann mittels eines Infrarot-, eines Laser- oder eines Spiegelschweißverfahrens mit dem Filtermedium 10 fest verbinden.

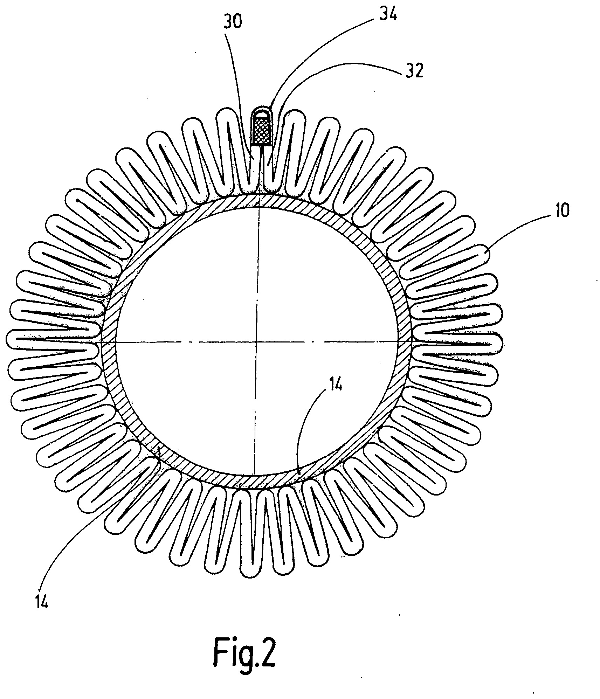

Wie die Querschnittsdarstellung durch das Filterelement nach der Fig. 1 gemäß der Darstellung nach der Fig. 2 zeigt, sind die beiden Längsränder 30, 32 des Filtermediums 10 in Umfangsrichtung mittels eines U-förmigen Längsnahtclips 34 miteinander verbunden. Der dahingehende Längsnahtclip 34 ist bevorzugt aus einem Folienmaterial gefertigt und kann dergestalt erhöhten Festigkeitsanforderungen gerecht werden. Als geeignete Werkstoffe hierfür kommt wieder der Werkstoff P304 der Fa. Biomer zum Einsatz oder Arborblend® 978M der Fa. TECNARO. Für einen festen Aneinanderhalt wird dann der dahingehende Längsnahtclip 34 mit den freien Filterfaltenenden 30, 32 beispielsweise mittels eines Ultraschallverfahrens fest verschweißt. Sind die Festigkeitsanforderungen nicht allzu hoch, kann anstelle eines Längsnahtclips auch unmittelbar ein Verkleben der freien Filterfalten 30, 32 mittels eines Hotmelt-Verfahrens mit dem bereits genannten thermoplastischen Bio-Kunststoff Arborblend® 978M Natur erfolgen. Auch wäre es möglich, das biologisch abbaubare Kunststoffmaterial des Filtermediums 10 entlang den Längsrändern 30, 32 unmittelbar miteinander zu verschweißen, beispielsweise mittels eines an sich bekannten Ultraschallschweißverfahrens.

Bei der Darstellung nach der Fig. 2 wurde der optional vorgesehene äußere Gehäusemantel 16 der einfacheren Darstellung wegen weggelassen. Wird das Filtermedium 10 mit seinen beiden Endkappen 26 von dem inneren Stützrohr 14 abgezogen, ist es unmittelbar auf einem Kompost in biologischer Weise abbaubar zu entsorgen. Durch die kompostierbare Lösung, bei der der Hydraulikfilter zu nahezu 100 % aus nachwachsenden Rohstoffen aufgebaut ist und deshalb in seiner Gesamtbilanz auch CO₂-neutral ist, lässt sich dieser nach Gebrauch, ohne die Umwelt zu belasten, auf biologischem Weg verlässlich entsorgen.

## Patentansprüche

1. Filterelement, bestehend aus mindestens einem sich zwischen zwei Endkappen (26) erstreckenden, vorzugsweise plissierten, Filtermedium (10), dessen beide freien Längsränder (30, 32) unter Bildung eines, vorzugsweise zylindrischen, Hohlraumes miteinander verbunden sind, wobei alle vorstehend genannten Komponenten, gemäß der DIN-Norm EN 14995, Stand 2006, aus biologisch abbaubaren Materialien bestehen, **dadurch gekennzeichnet, dass** zur Verbindung der beiden freien Längsränder (30, 32) des Filtermediums (10) miteinander ein Hotmelt-Klebstoff in Form eines thermoplastischen Kunststoffblends auf Ligninbasis oder ein Verbindungsclip (34) zum Einsatz kommt, der aus einem biologisch abbaubaren Folienmaterial in Form eines auf Polyhydroxyalkonaten basierenden thermoplastischen Kunststoffblends besteht, und dass das Kunststoffmaterial für die jeweilige Endkappe (26) aus einem auf Polyhydroxyalkonaten oder Lignin basierenden thermoplastischen Kunststoffblend gebildet ist.

2. Filterelement nach Anspruch 1, **dadurch gekennzeichnet, dass** das Filtermedium (10) ein- oder mehrlagig aufgebaut zumindest teilweise aus einem Papiermaterial für eine der Lagen, insbesondere im Rahmen der Hauptfilterlage (22) aus Zellulose, besteht, die frei von chemischer Modifizierung sowie von Binde- und Verfestigungsmitteln ist.

3. Filterelement nach Anspruch 1 oder 2, **dadurch gekennzeichnet, dass** das Filtermedium (10) ein Flächengewicht von 120 g/m² hat und zur Auflockerung der Medienstruktur einen etwa zehnprozentigen Anteil an Glasfasern aufweist.

4. Filterelement nach einem der vorstehenden Ansprüche, **dadurch gekennzeichnet, dass** das Filtermedium (10) zumindest auf einer Seite, vorzugsweise beidseitig, mit einem glashart appretierten Stützgewebe (18, 24) aus einem naturbelassenen Baumwollgarn versehen ist.

5. Filterelement nach einem der vorstehenden Ansprüche, **dadurch gekennzeichnet, dass** die jeweilige Endkappe (26) derart aus einem Kunststoffmaterial gebildet ist, dass es durch die Aktivität natürlich vorkommender Enzyme spaltbar ist, um dergestalt als Energie- und Rohstofflieferant für Mikroorganismen zu dienen, und dass es sich dennoch bei Betriebstemperaturen um 95 °C als beständig gegenüber dem zu filtrierenden Hydrauliköl erweist.

6. Filterelement nach einem der vorstehenden Ansprüche, **dadurch gekennzeichnet, dass** die jeweilige Endkappe (26) mittels eines Infrarot-, eines Laser- oder eines Spiegelschweißverfahrens mit dem Filtermedium verbunden ist.

7. Filterelement nach einem der vorstehenden Ansprüche, **dadurch gekennzeichnet, dass** es frei von einem Stützrohr (14) aufgebaut ist.

8. Filterelement nach einem der vorstehenden Ansprüche, **dadurch gekennzeichnet, dass** es frei ist von konventionellen Dichteinrichtungen, wie O-Dichtringen aus Elastomermaterial.

## Claims

1. Filter element consisting of at least one preferably pleated filter medium (10) extending between two end caps (26), the two free longitudinal edges (30, 32) of said filter medium being joined to form a preferably cylindrical cavity, all existing named components consisting of biodegradable materials in accordance with DIN EN 14995, 2006 edition, **characterised in that** a hot melt adhesive in the form of a thermoplastic lignin-based plastics blend or a connecting clip (34) are used to join together the two free longitudinal ends (30, 32) of the filter medium (10), said clip consisting of a biodegradable film material in the form of a thermoplastic plastics blend based on polyhydroxy alkonates, and **in that** the plastics material for the respective end cap (26) is formed from a thermoplastic plastics blend based on polyhydroxy alkonates or lignin.

2. Filter element according to claim 1, **characterised in that** the filter medium (10), which is designed as a single layer or multiple layers, consists at least partially of a paper material for one of the layers, particularly if the main filter layer (22) is made from cellulose, said layer being free from chemical modifications, binding and setting agents.

3. Filter element according to either claim 1 or claim 2, **characterised in that** the filter medium (10) has a basis weight of 120 g/m² and contains approximately ten percent of glass fibres to lighten the medium structure.

4. Filter element according to any one of the preceding claims, **characterised in that** the filter medium (10) is furnished on at least one side, preferably on both sides, with a backing (18, 24) with a glass-hard finish, said backing being made from a natural cotton thread.

5. Filter element according to any one of the preceding claims, **characterised in that** the respective end cap (26) is formed from a plastics material in such a way as to make it cleavable by the activity of naturally occurring enzymes such as to provide energy and raw materials for microorganisms, and yet which still proves resistant to the hydraulic oil to be filtered at operating temperatures in the region of 95°C.

6. Filter element according to any one of the preceding claims, **characterised in that** the respective end cap (26) is joined to the filter medium by means of an infrared, laser or hot plate welding method.

7. Filter element according to any one of the preceding claims, **characterised in that** it is constructed without a support tube (14).

8. Filter element according to any one of the preceding claims, **characterised in that** it is free from conventional sealing devices such as O-ring seals made from elastomer material.

## Revendications

1. Elément de filtre, constitué d'au moins un milieu (10) filtrant, de préférence plissé, s'étendant entre deux coiffes (26) d'extrémité et dont les deux bords (30, 32) longitudinaux libres sont reliés l'un à l'autre en formant une cavité, de préférence cylindrique, tous les composants mentionnés précédemment étant constitués suivant la norme DIN EN 14995, état 2006, de matériaux dégradables biologiquement, **caractérisé en ce que**, pour relier les deux bords (30, 32) longitudinaux libres du milieu (10) filtrant entre eux, il est utilisé une colle hotmelt, sous la forme d'un mélange de matières plastiques thermoplastiques à base de lignine ou une agrafe (34) de liaison, qui est constituée en un matériau en feuille dégradable biologiquement, sous la forme d'un mélange de matières plastiques thermoplastiques à base de polyhydroxyalcanoates et **en ce que** la matière plastique pour la coiffe (26) d'extrémité respective est en un mélange de matières plastiques thermoplastiques à base de polyhydroxyalcanoates ou de lignine.

2. Elément de filtre suivant la revendication 1, **caractérisé en ce que** le milieu (10) filtrant en une couche ou en plusieurs couche est constitué, au moins en partie, d'une matière de papier pour l'une des couches, notamment, dans le cadre de la couche (22) principale du filtre, en cellulose, qui est exempte de modification chimique, ainsi que d'agent liant et de consolidation.

3. Elément de filtre suivant la revendication 1 ou 2, **caractérisé en ce que** le milieu (10) filtrant a un poids surfacique de 120g/m² et a, pour le foisonnement de la structure du milieu, une proportion d'environ dix pour cent de fibres de verre.

4. Elément de filtre suivant l'une des revendications précédentes, **caractérisé en ce que** le milieu (10) filtrant est pourvu, au moins d'un côté, de préférence des deux côtés, d'un tissu (18, 24) d'appui, apprêté de manière dure comme du verre, en un fil de coton laissé naturel.

5. Elément de filtre suivant l'une des revendications précédentes, **caractérisé en ce que** la coiffe (26) d'extrémité respective est en une matière plastique, de manière à pouvoir être décomposée par l'activité d'enzymes se produisant naturellement, afin de servir de source d'énergie et de matière première à des microorganismes et **en ce qu'**elle s'avère toutefois être, à des températures de fonctionnement de 95°C, résistantes à l'huile hydraulique à filtrer.

6. Elément de filtre suivant l'une des revendications précédentes, **caractérisé en ce que** la coiffe (26) d'extrémité respective est reliée au milieu filtrant au moyen d'un procédé de soudage par infrarouge, par laser ou à l'aide de réflecteurs.

7. Elément de filtre suivant l'une des revendications précédentes, **caractérisé en ce qu'**il est constitué sans tube (14) d'appui.

8. Elément de filtre suivant l'une des revendications précédentes, **caractérisé en ce qu'**il est exempt de dispositif d'étanchéité classique, comme des joints toriques en matériau élastomère.
